# EUROPEAN PATENT SPECIFICATION

(11) **EP 0 462 164 B1**
(45) Date of publication and mention of the grant of the patent: **04.01.1995**
(21) Application number: 90904387.9
(22) Date of filing: 07.03.1990
(51) Int. Cl.: A23L 1/314, A23L 1/317

(54) **METHOD OF RECONSTITUTING MEAT PRODUCTS**
VERFAHREN ZUR HERSTELLUNG EINES REKONSTITUIERTEN FLEISCHERZEUGNISSES
PROCEDE DE RECONSTITUTION DE PRODUITS CARNES

(30) Priority: 08.03.1989 GB 8905292
(43) Date of publication of application: 27.12.1991
(73) Proprietor: STORK FIBRON B.V., 5349 AE Oss (NL)
(72) Inventor: FRENCH, James, William, Leonard, Dorchester Dorset BT2 7SZ (GB)
(74) Representative: Woodcraft, David Charles
(86) International application number: GB9000344
(87) International publication number: WO9010393

(56) References cited:
- WO-A-89/11799
- FR-A- 2 132 785
- GB-A- 2 201 877
- Journal American Leather Chemists Association, (69), 1974, M. Komanowsky et al.: "Production of comminuted collagen for novel applications"

## Description

The present invention relates to a method of reconstituting meat and the improved products resulting therefrom.

De-boned or separated meat is obtained by de-boning carcasses after removal of meat cuts and the resulting de-boned or separated meat (hereinafter D or S meat) is conventionally added to higher quality meat, e.g. forequarter beef in the production of manufactured food products such as beefburgers or canned meat or pie filling. There are, however, limitations in the amount of D or S meat which can be added to such meat products, primarily because the resulting mixed meat product has a rather poor structure and texture.

The present invention is based on the discovery that if fibrous collagen is introduced into the D or S meat under certain conditions, the resulting restructured product has enhanced properties including, particularly, texture which approximates to those of higher quality meat cuts.

According to the present invention there is provided a method of reconstituting meat products, which comprises mixing with a de-boned or separated meat (D or S meat) a fibrous collagen so as to distribute the added collagen substantially homogeneously throughout the D or S meat, removing occluded air and voids from the mixture and forming the mixture into discrete portions, or a continuous extrusion by pressing the mixture through a restrictor.

As is well known, collagen is a protein which forms the main constituent of connective tissue and is present in higher proportions in tendons, bones and skin. Various commercial processes exist for recovering collagen from such sources, e.g. that described in U.S. patent 2,979,438. Typically, the connective tissue, skin or bone is broken down mechanically and treated with an aqueous salt-solution and/or enzymes to remove associated carbohydrates fats and shorter chain proteins. Collagen exists in nature, together with accompanying fibrous proteins, such as elastin and reticulin, and generally such additional fibrous proteins are not removed in the preparation of the fibrous collagen starting material of the present invention. After removal of carbohydrates, fats and shorter chain proteins as described above, the fibrous residue is dried at a temperature sufficiently low to avoid denaturing the protein.

UK-A-2 201 877 discloses coextensively aligning jerky and the Journal American Leather Chemists Association, (69), 1974, pages 410-422 discloses the production of comminuted collagen for novel applications.

It is important for the purposes of this invention that the collagen is employed in a fibrous state. Commercially available collagen is generally supplied as a dried powder rather than as a fibre. In the performance of the process of this invention, fibrous collagen having an average fibre length of from about 0.5 to 3 mm (typically about 1 mm) is preferred.

After separation of fats, carbohydrates etc. as described above, the raw collagen material is subjected to milling. At this stage, the collagen material normally has a water-content of 65 to 70%. The raw collagen material can be reduced to approximately pea size particles by mincing the wet product through an apertured plate having approximately 5 mm openings, e.g. using a Hobart mincer.

The minced raw collagen is then subject to drying in a controlled fashion. The drying temperature should be maintained below about 50-55°C., in order to avoid denaturing and case hardening the collagen. A fluidised bed dryer may be employed such as the shaking fluid bed dryer manufactured by Stork Friesland of Gorredijk, Holland. Prior to feeding the collagen material to the fluid bed dryer, it is agitated using a mechanical stirrer. A drying temperature in the fluidised bed of about 47 to 50°C is suitable. Drying is continued to a water-content of about 7 to 10%.

According to a further aspect the present invention provides a reconstituted meat product which comprises an intimate mixture of de-boned or separated meat (D or S meat), and at least 1% by weight of fibrous collagen.

The manufacture of the reconstituted meat products in accordance with the process of this invention is illustrated by the accompanying schematic drawing and following description.

The dried fibrous collagen is mixed with de-boned or separated meat and preferably this mixing is carried out in a mixer/blender (1) of the horizontal paddle type, since such an apparatus best achieves an homogeneous dispersion of the fibres in the D or S meat. An example of a suitable paddle mixer is the model RS750 manufactured by Risco Brevetti S.p.A. of Zane, Italy. This machine comprises a trough and a pair of longitudinal shafts on which a series of inclined, interengaging paddles are mounted. The shafts may be rotated inwardly or outwardly, and in mixing the collagen into the D or S meat, the paddles are preferably rotated both inwardly and outwardly. The mixing can be carried out together with some added salt and water, although the amount of added salt should preferably be in the range of .5 to 1% by weight of the total mixture. The added water causes some degree of swelling of the collagen or associated gelatin which may be present in the collagen. This absorption of water gives the resulting product a juiciness which is not present in the original D or S meat. Preferably any added water should not constitute more than 20% by weight, and a preferred amount is 5 to 15% by weight. The de-boned or separated meat may include ground pork, lamb, beef, poultry or fish, including shellfish and the fibrous collagen may or may not be derived from the same species as the D or S meat. However, it is generally advantageous to use a collagen from the same species so that the resulting product can be labelled as meat from a single specified animal source.

The fibrous collagen is mixed in any desired proportions with the D or S meat. While there is no precise minimum amount of collagen fibres which should be mixed with the D or S meat, a significant improvement in texture and consistency of the resulting mix is not achieved unless a minimum of about 1% of collagen fibres is mixed with the D or S meat. There is no critical upper limit, although, generally speaking, addition of more than about 10% does not give rise to any further benefit. Preferred amounts of added collagen are in the range of 3 to 6%.

From the paddle mixer, which is preferably operated under vacuum, the mixture is transferred to a vacuum filler machine (2). This transfer can be made via a hopper as shown or transferred while held under vacuum. The vacuum filling machine (2) is of the kind which is used, e.g. for filling sausage casings and includes a piston which forces the mixture out of the filling machine through a tube 3 and into a restrictor 4. Any occluded air or voids in the mixture of collagen and D & S meat are removed in the vacuum filling machine. Restrictor 4 incorporates a tapered portion which tapers inwardly in the direction in which the mixture is forced into a portion forming machine 5. Machine 5 forms the mixed meat and collagen into portions e.g. by compression between shaped plates or by intermittent or continuous extrusion. The portion forming machine may be of the kind used for forming hamburgers or meat patties. At this point, the portioned product may be packed into casings, e.g. sausage skins and/or transferred to a plate freezer 6 in which the portioned product is placed between cooled plates and rapidly frozen. After freezing the portions are held in a frozen food store.

The mixing temperature in paddle mixer 1 is preferably maintained at a minimum of about 6 to 7°C, preferably about 6 to 10°C, when there tends to be a release of myacin and other proteins, which is desirable. At this temperature there is little or no conversion of the collagen to gelatin. Temperatures in excess of 10°C should be avoided to limit any risk of bacterial development. Indeed the whole processing stage should be limited to a maximum of 10°C. In the initial mixing stage e.g. in the horizontal paddle mixer 1, the raw D or S meat may be mixed alone with the collagen fibres and the resulting product mixed subsequently with whole meat. Alternatively, whole muscle meat, such as forequarter beef, may be mixed in with the D or S meat and the collagen initially.

The properties of the restructured meat products are improved by forcing the product through a restrictor after compounding it in the vacuum filling machine. Generally, the restrictor should comprise an inwardly extending tubular passageway followed by a straight section or reverse tapered section, so that the compounded meat is subjected to an increased pressure followed by a gradual release of pressure. During the pressing stage, during which the compounded product is forced out of the mixer, a pressure of 1 to 10 atmospheres (1,013·10⁵ Pa to 1,013·10⁶ Pa) gauge is preferably employed. The step of forcing the compounded meat out of the mixer and then controlling the release of pressure improves the texture and appearance of the product possibly as a result of some aligning of the collagen fibres.

Following the step of extruding the product from the vacuum filling machine, the restructured product is conveniently shaped and pressed into portions of desired size and stored under a maintained pressure. This can be achieved by freezing in a plate freezer or packing the product in a restraining packaging. This seems to have the effect of maintaining the desirable texture and binding properties of the product, possibly as a result of some continuing reaction during storage involving partial joining of the meat and collagen protein.

When subsequently cooked, there is a partial conversion of the collagen into gelatin which gives beneficial binding properties to the product in food manufacturing procedures. Gelatin or other edible binders may also be introduced into the product, preferably at the stage of mixing the collagen with the D or S meat.

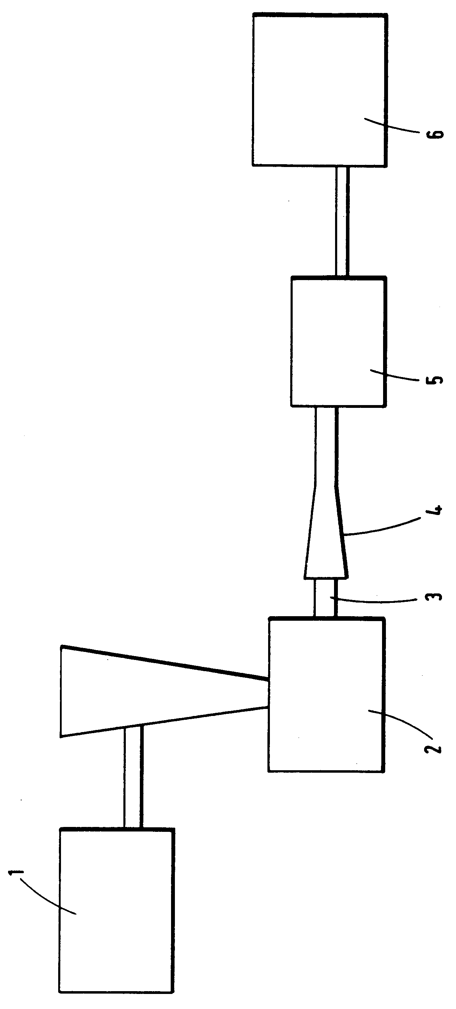

## Claims

1. A method of reconstituting meat products which comprises mixing a deboned or separated meat (D or S meat) with dried fibrous collagen to distribute the fibrous collagen throughout the meat, removing occluded air or voids from the mixture and forming the mixture into discrete portions, and then cooking the resulting mixture, whereby the D & S meat is bound together to form a coherent product having improved texture.

2. A method as claimed in claim 1 wherein said mixing is carried out at a temperature of at least 7°C.

3. A method according to any one of the preceding claims in which occluded air is removed in a vacuum filling machine and the mixture forced through a restrictor.

4. A method as claimed in any one of the preceding claims wherein the collagen is added in an amount of from 1 to 10% by weight of the D or S meat.

5. A method according to any one of the preceding claims in which the collagen has been dried at a temperature sufficiently low to avoid denaturing the collagen.

6. A reconstituted meat product which comprises an intimate mixture of deboned or separated meat (D or S meat), and at least 1% by weight of dried fibrous collagen and which is in the form of compressed portions from which air has been removed by vacuum processing, said collagen having been dried prior to admixture with the D or S meat and the product having been cooked to effect partial conversion of the collagen to gelatin.

7. A product according to claim 6 which contains 3 to 6% by weight of fibrous collagen.

## Patentansprüche

1. Verfahren zum Rekonstituieren von Fleischprodukten, das umfasst, entbeintes oder abgetrenntes Fleisch (D- oder S-Fleisch) mit getrocknetem fasrigem Kollagen zu mischen, um das fasrige Kollagen in dem Fleisch zu verteilen, eingeschlossene Luft oder Lücken von der Mischung zu entfernen, und die Mischung in diskrete Portionen zu formen, und dann die sich ergebende Mischung zu kochen, wobei das D- & S-Fleisch zusammengebunden wird, um ein einheitliches Produkt mit verbesserter Textur zu bilden.

2. Verfahren nach Anspruch 1, in dem das Mischen bei einer Temperatur von wenigstens 7°C durchgeführt wird.

3. Verfahren nach einem der vorhergehenden Ansprüche, in dem eingeschlossene Luft in einer Vakuumfüllmaschine entfernt wird, und die Mischung durch eine Einschränkungseinrichtung gezwängt wird.

4. Verfahren nach einem der vorhergehenden Ansprüche, in dem das Kollagen in einer Menge von 1 bis 10 Gewichts% des D- oder S-Fleisches zugegeben wird.

5. Verfahren nach einem der vorhergehenden Ansprüche, in dem das Kollagen bei einer Temperatur getrocknet worden ist, die tief genug liegt, um Vergällung des Kollagens zu vermeiden.

6. Rekonstituiertes Fleischprodukt, das eine innige Mischung aus entbeintem oder getrenntem Fleisch (D- oder S-Fleisch) und wenigstens 1 Gewichts% getrocknetem fasrigen Kollagen umfasst, und das in Gestalt von zusammengedrückten Portionen ist, von denen Luft durch Vakuumverarbeitung entfernt worden ist, wobei das Kollagen vor der Zumischung mit dem D- oder S-Fleisch getrocknet wurde und das Produkt gekocht wurde, um Teilumwandlung des Kollagens in Gelatine zu bewirken.

7. Produkt nach Anspruch 6, das 3 bis 6 Gewichts% fasriges Kollagen enthält.

## Revendications

1. Méthode de reconstitution de produits de viande comportant le mélange d'une viande désossée ou séparée (viande D ou S) avec du collagène sec fibreux de façon à distribuer le collagène fibreux de part et d'autre de la viande, éliminant du mélange l'air retenu ou les vides et formant le mélange en portions discrètes, effectuant par la suite la cuisson du mélange qui en résulte, la viande D et S étant agglomérée pour former un produit cohérent ayant une texture améliorée.

2. Méthode telle que revendiquée à la revendication 1 selon laquelle le mélange est effectué à une température d'un minimum de 7°C.

3. Méthode telle que revendiquée à l'une ou l'autre des revendications ci-avant selon laquelle l'air retenu est éliminé dans un appareil de remplissage sous vide, le mélange étant forcé au travers d'un dispositif restricteur.

4. Méthode telle que revendiquée à l'une ou l'autre des revendications ci-avant selon laquelle le collagène est ajouté à raison d'un montant entre 1 et 10% par poids de la viande D et S.

5. Méthode telle que revendiquée à l'une ou l'autre des revendications ci-avant selon laquelle le collagène a été séché à température suffisante pour éviter la dénaturation du collagène.

6. Produit de viande reconstituée comportant un mélange intime de viande désossée ou séparée (viande D ou S), et un minimum de 1% par poids de collagène sec fibreux sec qui est sous forme de portions comprimées dont l'air est éliminé suivant le traitement sous vide, ledit collagène ayant été séché avant le mélange avec la viande D et S et le produit ayant été cuit pour assurer la conversion partielle du collagène en gélatine.

7. Produit selon la revendication 6 contenant de 3 à 6% par poids de collagène fibreux.
